# FASCICULE DE BREVET EUROPEEN

(11) **EP 4 311 799 B1**
(45) Date de publication et mention de la délivrance du brevet: **26.03.2025**
(21) Numéro de dépôt: 23187672.3
(22) Date de dépôt: 25.07.2023
(51) Int. Cl.: B65G 47/86, B67C 7/00

(54) **SYSTÈME DE MANIPULATION DE CONTAINERS ET PROCÉDÉ DE MANIPULATION**
CONTAINERHANDHABUNGSSYSTEM UND HANDHABUNGSVERFAHREN
CONTAINER HANDLING SYSTEM AND HANDLING METHOD

(30) Priorité: 28.07.2022 BE 202205603
(43) Date de publication de la demande: 31.01.2024
(73) Titulaire: Aseptic Technologies, 5032 Les Isnes (BE)
(72) Inventeur: BALERIAUX, Patrick, 6120 Nalinnes (BE); THIRY, Alain, 4570 Marchin (BE)
(74) Mandataire: Gevers Patents

(56) Documents cités:
- EP-A1- 3 912 938
- DE-A1- 102018 126 864
- IT-A1- PR20 090 040

## Description

### Domaine technique

La présente invention concerne un système de manipulation de containers aptes à contenir une substance médicinale et un procédé de manipulation de containers.

### Art antérieur

Des containers aptes à contenir une substance médicinale (telles que des vaccins) ou d'autres substances biologiques (telles que des cellules) sont manipulés lors de l'introduction de la substance dans le container. Des opérations sont à effectuer sur les containers, avec une grande précaution.

Il y a un donc un besoin pour un système de manipulation de containers permettant une manipulation avec précaution des containers. DE 10 2018 126864 A1 divulgue un système qui comprend les caractéristiques du préambule de la revendication 1.

### Exposé de l'invention

À cet effet, l'invention propose un système de manipulation de containers aptes à contenir une substance médicinale, comme décrit dans la revendication 1 annexée, comprenant une roue mobile en rotation autour d'un axe, des pinces de manipulation de container, les pinces étant articulées à la roue et étant mobiles entre une configuration fermée de saisie d'un container et une configuration ouverte de libération d'un container, chaque paire de pinces comprenant des rampes aptes à soulever ou déposer un container lors du passage des pinces d'une configuration à une autre.

Selon une variante, les rampes sont aptes à soulever un container entre la configuration ouverte et la configuration fermée des pinces et sont aptes à déposer un container entre la configuration fermée et la configuration ouverte des pinces.

Selon une variante, les pinces en configuration fermée immobilisent un container selon une direction verticale.

Selon une variante, les pinces en configuration fermée sont aptes à immobiliser le container avec un espace entre les pinces et le container, autour de la surface latérale extérieure du container.

Selon une variante, les rampes d'une paire de pinces ont une pente en regard l'une de l'autre.

Selon l'invention, le système comprend en outre des stations, les pinces étant aptes à déposer un container sur les stations et à soulever un container depuis les stations.

Selon l'invention, les stations comportent une rainure dans laquelle les rampes d'une pince sont aptes à se déplacer entre les configurations ouverte et fermée.

Selon une variante, entre la configuration ouverte et la configuration fermée des pinces, les rampes sont aptes à pénétrer dans la rainure pour soulever un container depuis une station.

Selon une variante, entre la configuration fermée et la configuration ouverte des pinces, les rampes sont aptes à s'écarter l'une de l'autre dans la rainure pour déposer un container sur une station.

Selon une variante, la roue est mobile en rotation par incrément entre différentes stations.

Selon une variante, le système comprend en outre à chaque station des organes parmi des organes d'introduction d'un container entre les pinces, des organes d'introduction d'une substance médicinale dans les containers, des organes de pesée des containers à vide et contenant la substance médicinale, des organes de fermeture des containers, des organes d'apposition d'une capsule sur les containers..

Selon une variante, les pinces sont aptes à s'écarter l'une de l'autre entre la configuration fermée et la configuration ouverte d'une dimension supérieure au diamètre extérieur d'un container.

Selon une variante, les pinces sont aptes à s'écarter l'une de l'autre entre la configuration fermée et la configuration ouverte d'une dimension inférieure au diamètre extérieur d'un container.

Selon une variante, les pinces comportent un bras articulé à la roue d'une part, et supportant une mâchoire et une rampe d'autre part.

Selon une variante, les rampes sont aptes à présenter une zone de préhension d'un container aux mâchoires dans la configuration fermée des pinces.

Selon une variante, les pinces sont reliées électriquement à la masse du système.

Selon une variante, les pinces sont en matière synthétique apte à conduire les charges électrostatiques.

L'invention se rapporte aussi à un procédé de manipulation de containers aptes à contenir une substance médicinale, comme décrit dans la revendication annexée, le procédé comprenant la fourniture du système tel que décrit précédemment et la fourniture de containers, la manipulation des containers par le système.

Il est aussi envisageable que la manipulation des containers par le système comprend le soulèvement des containers depuis des stations du système ou le dépôt des containers sur les stations par le passage des pinces entre des configurations fermée ou ouverte.

Il est aussi envisageable que, entre la configuration ouverte et la configuration fermée des pinces, les rampes pénètrent dans une rainure des stations pour soulever un container depuis la station.

Il est aussi envisageable que, entre la configuration fermée et la configuration ouverte des pinces, les rampes s'écartent l'une de l'autre dans une rainure des stations pour déposer un container sur la station.

L'usage, dans ce document, du verbe « comprendre », de ses variantes, ainsi que ses conjugaisons, ne peut en aucune façon exclure la présence d'éléments autres que ceux mentionnés. L'usage, dans ce document, de l'article indéfini « un », « une », ou de l'article défini « le », « la » ou « l' », pour introduire un élément n'exclut pas la présence d'une pluralité de ces éléments.

Les termes « premier », « deuxième », « troisième », etc. sont, quant à eux, utilisés dans le cadre de ce document exclusivement pour différencier différents éléments, et ce sans impliquer d'ordre entre ces éléments.

L'ensemble des modes de réalisation préférés ainsi que l'ensemble des avantages du système de manipulation selon l'invention se transposent mutatis mutandis au présent procédé de manipulation des containers, et inversement. Les différents modes de réalisation peuvent être considérés seuls ou en combinaison.

### Brève description des figures

D'autres caractéristiques et avantages de la présente invention apparaîtront à la lecture de la description détaillée qui suit pour la compréhension de laquelle on se reportera aux figures annexées qui montrent :
- la figure 1, une vue schématique d'un exemple de réalisation d'un système selon l'invention ;
- la figure 2, une vue schématique d'un détail du système selon la figure 1 ;
- la figure 3, une vue schématique d'un détail du système selon la figure 1 ;
- la figure 4, une vue schématique d'un détail du système selon la figure 1.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation de l'invention

L'invention se rapporte à un système de manipulation de containers aptes à contenir une substance médicinale. Le système comprend une roue mobile en rotation autour d'un axe et des pinces de manipulation de container, les pinces étant articulées à la roue. Les pinces sont mobiles entre une configuration fermée de saisie d'un container et une configuration ouverte de libération d'un container. Chaque paire de pinces comprenant des rampes aptes à soulever ou déposer un container lors du passage des pinces d'une configuration à une autre. Ceci permet de saisir ou libérer un container le long des rampes avec douceur et donc de manipuler les containers avec précaution.

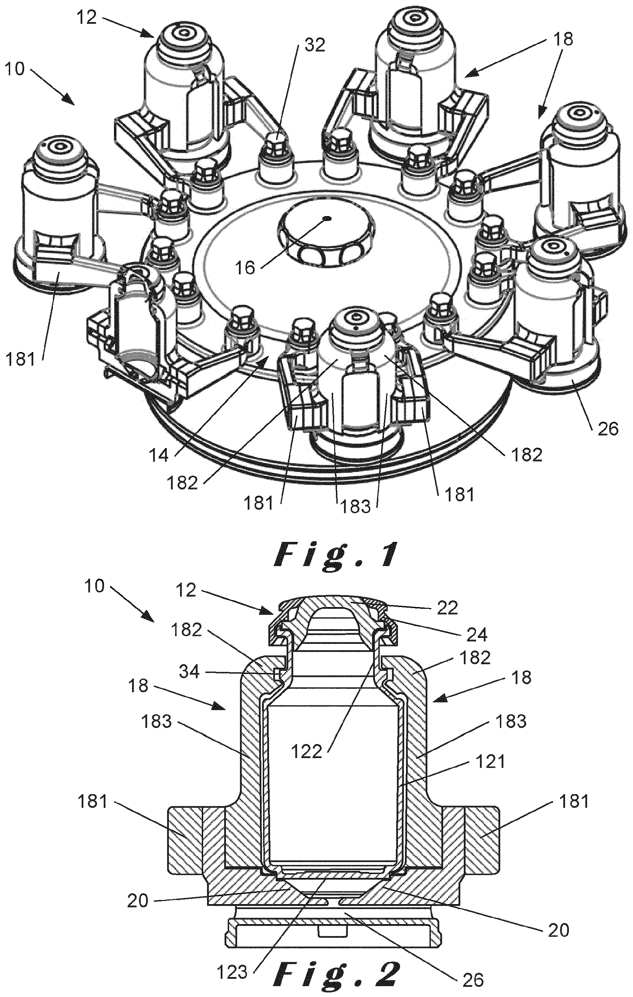

La figure 1 montre une vue schématique d'un exemple de réalisation d'un système 10 selon l'invention. Le système 10 permet la manipulation de containers 12 aptes à contenir une substance médicinale. Un container 12 est apte à recevoir une substance qui peut être une substance médicinale, pharmaceutique. L'usage dans ce document de l'expression « substance médicinale » ou « substance pharmaceutique » ou « substance » couvre à la fois tout type de médicament, de nature chimique ou biologique, ou tout ingrédient destiné à être incorporé dans la formulation d'un médicament, ainsi que toutes autres substances biologiques nécessitant un stockage à basse température, telles que des cellules par exemple. La substance est de préférence fluide, liquide. La substance peut être destinée à être injectée dans le corps d'un patient, humain ou animal, par exemple avec une seringue. La substance peut être injectée en une fois dans le patient, ou de manière continue. Le container est susceptible de recevoir une quantité prédéfinie de substance médicinale. Par exemple, le container peut recevoir une seule dose de substance. La quantité de substance correspond alors à ce qui est destiné à être administré en une fois dans le patient.

La quantité de substance à introduire dans les containers 12 est définie très précisément. Ainsi, le système comprenant les containers 12 permet de les manipuler avec précision et donc précaution lors des étapes de traitement des containers 12, notamment des étapes d'introduction de substance dans les containers 12 et de vérification de la quantité introduite. Pour cela, le système 10 comprend une roue 14 mobile en rotation autour d'un axe 16. La roue 14 est mobile en rotation dans un plan. La roue 14 permet l'entraînement en rotation d'une pluralité de containers 12 au travers des différentes étapes pour l'introduction de la substance. La roue 14 entraîne successivement les containers vers une pluralité de stations permettant le traitement des containers 12. La roue peut être mobile en rotation par incrément entre différentes stations, ce qui permet un positionnement précis des containers 12 à chaque station. A titre d'exemple, sept stations sont représentées sur la figure 1. On peut envisager une première station dans laquelle un container 12 est livré au système 10. Un robot non visible sur les figures peut par exemple charger un container 12 à traiter dans le système 10. Puis, le container 12 chargé sur le système 10 peut être entraîné vers une deuxième station dans laquelle le container 12 est pesé à vide. Selon une troisième station, la substance est introduite dans le container 12 au moyen d'un aiguille de remplissage avant que le container soit entraîné vers une quatrième station dans laquelle le container 12 est fermé après le retrait de l'aiguille de remplissage. Entraîné vers une cinquième station, le container 12 peut être pesé avec la substance. Puis à une sixième station, une capsule peut être apposée sur le container 12 afin d'en protéger la face extérieure d'un bouchon de fermeture du container. En fin de rotation, la roue 14 entraîne le container 12 vers une septième station où le container 12 peut être retiré du système 10, par exemple par un robot. A chaque incrément de la roue, une pluralité de containers 12 (en l'occurrence sept containers 12 selon la figure 1) sont simultanément traités à des stations différentes. A chaque station, des organes sont prévus parmi des organes d'introduction d'un container entre les pinces, des organes d'introduction de la substance médicinale dans les containers, des organes de pesée des containers à vide et contenant la substance médicinale, des organes de fermeture des containers, des organes d'apposition d'une capsule sur les containers,. Un tel système 10 permet le traitement de containers 12 de manière précise tout en respectant des cadences industrielles.

Le système 10 comprend des pinces 18 de manipulation des containers 12. Les pinces 18 sont articulées à la roue 14, ce qui permet de les actionner selon la position angulaire de la roue 14. Les pinces 18 sont mobiles entre une configuration fermée de saisie d'un container 12 et une configuration ouverte de libération du container 12. Ainsi, selon la position angulaire de la roue 14, les containers 12 sont en prise dans les pinces 18 ou bien sont libérées des pinces 18. Selon la station à laquelle l'un ou l'autre des containers 12 est entrainé, et selon l'étape de traitement que les containers 12 reçoivent à chaque station, les pinces sont dans une configuration ouverte ou fermée. Par exemple, les pinces sont dans une configuration ouverte à une station de pesée et sont dans une configuration fermée à une station d'introduction de la substance ou d'apposition d'une capsule. Sur la figure 1, les pinces sont représentées en configuration fermées dans laquelle les containers 12 sont saisis par les pinces 18 - par exemple pour les changer de stations. Il est envisageable qu'une partie des pinces soient en configuration fermée pour saisir les containers 12 et une partie des pinces soient en configuration ouverte pour libérer les containers 12. La saisie ou la libération par les pinces 18 dépend de l'étape de traitement des containers 12.

Les pinces 18 fonctionnent par paire, afin de saisir les containers 12. Chaque paire de pinces 18 comporte des rampes 20 aptes à soulever ou à déposer un container 12 lors du passage des pinces 18 d'une configuration à une autre. Les rampes 20 permettent un déplacement en douceur des containers 12 entre les configurations fermée et ouverte des pinces 18.

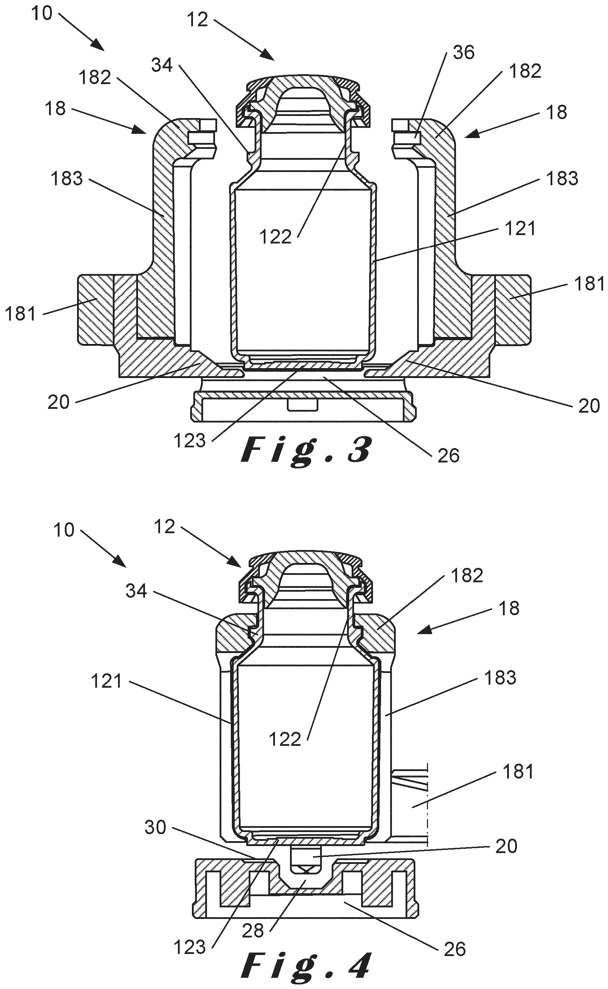

Les figures 2 et 3 illustrent des vues schématiques d'un détail du système 10 selon la figure 1. Plus spécifiquement, les figures 2 et 3 montrent une vue en détail des pinces 18 comprenant les rampes 20.

Selon la figure 2, les pinces 18 sont dans une configuration fermée de saisie du container 12. La paire de pinces 18 enserre le container 12 afin de le saisir. Les pinces 18 permettent d'immobiliser le container 12 afin de l'entraîner vers une station subséquente du traitement des containers 12. Les pinces 18 en configuration fermée permettent aussi d'immobiliser un container 12 selon une direction verticale - vers le haut et/ou vers le bas. Ceci permet de faire une action sur le container sans que celui-ci échappe aux pinces 18. Par exemple, dans le cas du remplissage de containers stériles préalablement fermés, le container 12 est immobilisé verticalement pour résister à une force d'insertion (de haut en bas) de l'aiguille de remplissage au travers du bouchon 22 du container et à la force de retrait (de bas en haut) de l'aiguille après introduction de la substance dans le container 12 par l'aiguille. Le container 12 est aussi immobilisé verticalement pour résister à une force appliquée de haut en bas sur le bouchon 22 pour fermer le container 12 après remplissage, par exemple par l'utilisation d'un laser dans le cas du remplissage de containers stériles préalablement fermés. Le container 12 est aussi immobilisé verticalement pour résister à une force appliquée de haut en bas sur le bouchon pour apposer une capsule 24 sur le bouchon 22. Selon la figure 3, les pinces 18 sont dans une configuration ouverte de libération du container 12. Les pinces 18 sont écartées du container 12 afin de le libérer. Les pinces 18 permettent de déposer le container 12 sur une station 26. Par exemple, il peut s'agir d'une station de pesée ; la libération du container permet de peser le container 12 sans que la pesée soient faussée par le frottement ou l'influence électrostatique des pinces 18 - ce qui rend la pesée précise.

Entre la figure 3 et la figure 2, les rampes 20 sont aptes à soulever le container 12 entre la configuration ouverte et la configuration fermée des pinces 18. Le container 12 est soulevé depuis la station 26 par les rampes 20 lors du mouvement de fermeture des pinces 18. Le container 12 est déplacé le long des rampes, ce qui permet d'opérer un mouvement en douceur. Entre la figure 2 et la figure 3, les rampes 20 sont aptes à déposer le container 12 entre la configuration fermée et la configuration ouverte des pinces 18. Le container 12 est déposé sur la station 26 par les rampes 20 lors du mouvement d'ouverture des pinces 18. Le container 12 est déplacé le long des rampes, ce qui permet d'opérer un mouvement en douceur, sans rebond au contact de la station 26 - évitant le basculement du containers 12 et une localisation imprécise sur la station 26. La partie du container 12 en contact avec les rampes 20 est le fond 123 du container 12.

Le système 10 permet une localisation précise des containers 12 à chaque station 26. Lorsque les pinces 18 passent en configuration fermée, la position des containers 12 soulevés par les rampes 20 est précisément connue dans un plan horizontal et vertical. Ceci permet d'opérer des actions sur les containers saisis par les pinces de manière précise. Par exemple, dans le cas du remplissage de containers stériles préalablement fermés, l'insertion d'une aiguille est en un emplacement précis du bouchon 22, ce qui permet par la suite de sceller cet emplacement avec précision ; l'apposition d'une capsule 24 est aussi précisément réalisée. Lorsque les pinces 18 passent en configuration ouverte, la position des containers 12 déposés par les rampes 20 sur une station est précisément connue sur la station 26. En particulier, un mouvement de rebond des containers 12 au contact des stations 26 est évité, ce qui réduit le temps de stabilisation du container 12 sur la station 26. Ceci permet d'opérer des actions sur les containers libérés et positionnés sur les stations de manière précise et rapide. Par exemple, ceci permet de peser rapidement et précisément le container avant et après introduction de la substance médicinale, pour en connaître précisément la quantité. Puis les containers sont à nouveau saisis par les pinces 18 de manière précise car les containers 12 sont en une localisation connue sur le plan des stations 26 - contrairement à des systèmes de l'art antérieur où les containers 12 sont poussés d'une station à une autre, l'élan imparti aux containers empêchant de connaître précisément la position des containers 12. Ainsi, le système permet une manipulation rapide et précise des containers, pour satisfaire des cadences industrielles tout en donnant des résultats précis.

Les rampes 20 d'une paire de pinces 18 ont une pente en regard l'une de l'autre. Ainsi, par la fermeture des pinces 18 d'une paire, les rampes se rapprochent l'une de l'autre pour soulever le container 12 depuis la station 26 et par l'ouverture des pinces 18 de la paire, les rampes s'éloignent l'une de l'autre pour déposer le container 12 sur la station 26. Les rampes permettent de s'adapter facilement à l'écart de hauteur entre les pinces 18 et la station 26. Les rampes 20 permettent le glissement du container en direction de la saisie ou de la libération par les pinces 18, ce qui permet de déposer ou de soulever sans à-coup les containers 12 - ce qui contribue aux avantages cités dans cette description.

La figure 4 illustre un autre détail du système 10 de la figure 1. La figure 4 est une vue en coupe perpendiculaire aux vues des figures 2 et 3. Selon l'exemple de la figure 4, les stations 26 du système 10 comportent une rainure 28 dans laquelle les rampes 20 d'une pince 18 sont aptes à se déplacer entre les configurations ouverte et fermée. Les pinces 18 de la figure 4 sont dans une configuration fermée, selon laquelle le container 12 a été soulevé de la station 26. Afin d'assurer le dépôt ou le soulèvement d'un container 12 de la station 26, les pinces 18 d'une paire sont actionnées avec les rampes 20 pénétrant l'une vers l'autre ou s'écartant l'une de l'autre dans la rainure 28. Ceci permet aux rampes 20 d'être actionnées sous une surface 30 des stations 26 sur laquelle les containers 12 sont destinés à être déposés. Les rampes saisissent les containers 12 par le fond des containers 12 en se déplaçant le long de la rainure 28. L'extrémité la plus basse des rampes est dans la rainure 28, et ainsi plus basse que la surface 30 de dépôt des containers. L'extrémité la plus haute des rampes 20 et au-dessus (ou en d'autres termes, en dehors) de la rainure 28, et ainsi plus haute que la surface 30 de dépôt des containers. Lors du passage de la configuration fermée de la figure 2 à la configuration ouverte de la figure 3, les rampes 20 s'écartent l'une de l'autre dans la rainure 28 pour déposer le container sur la surface 30 d'une station 26. Le container glisse vers le bas des rampes 20 jusqu'à entrer en contact de la surface 30 et y être déposé, immobilisé, sans rebond. Inversement, lors du passage de la configuration ouverte de la figure 3 à la configuration fermée de la figure 2, les rampes 20 pénètrent l'une vers l'autre dans la rainure 28 pour soulever le container de la surface 30 d'une station 26. Le container glisse vers le haut des rampes 20 jusqu'à être immobilisé entre les pinces 18.

Les pinces 18 peuvent comporter un bras 181 qui d'une part est articulé à la roue 14 et d'autre part supporte une mâchoire 182 et la rampe 20. Les bras 181 sont articulés à la roue 14 par des articulations 32 visibles sur la figure 1. L'actionnement des bras 181 peut être effectué par un mécanisme de came non visible sur les figures, permettant l'ouverture ou la fermeture des pinces 18 en fonction de la position angulaire de la roue 14 - et donc de la position des pinces par rapport aux stations 26. Les mâchoires 182 d'une paire de pinces 18 sont destinées à venir en contact des containers 12 et ainsi immobiliser les containers 12. Une paire de mâchoires 182 enserre un container de sorte à l'immobiliser selon une direction verticale, vers le haut et vers le bas. Les mâchoires 182 ont une forme qui épouse la surface extérieure des containers 12. Les mâchoires ont une forme arquée qui suit le diamètre extérieur des containers 12. Les mâchoires 182 empêchent les containers 12 de basculer lorsqu'ils sont en prise dans les pinces. Les paires de mâchoires 182 peuvent enserrer les containers sur plus de 50% de la circonférence des containers - afin d'en assurer la stabilité. En outre, les pinces sont aptes à s'écarter l'une de l'autre entre la configuration fermée et la configuration ouverte d'une dimension supérieure au diamètre extérieur d'un container. En d'autres termes, le mouvement d'éloignement l'une de l'autre des pinces est opéré sur une distance supérieure au diamètre des containers. En position ouverte des pinces, un container 12 peut passer entre les mâchoires 182 des pinces 18. Ainsi, aux stations 26 où les container 12 sont chargés sur le système 10 ou aux stations 26 où les containers 12 sont retirées du système 10, les containers 12 sont déplacés horizontalement entre les mâchoires 182 - possiblement par un robot. Ceci permet de tenir de hautes cadences de productivité.

Dans un autre arrangement, les pinces 18 sont aptes à s'écarter l'une de l'autre entre la configuration fermée et la configuration ouverte d'une dimension inférieure au diamètre extérieur d'un container. En d'autres termes, le mouvement d'éloignement l'une de l'autre des pinces est opéré sur une distance inférieure au diamètre des containers. En position ouverte des pinces, un container 12 ne peut pas passer entre les mâchoires 182 des pinces 18, ce qui empêche le risque de basculement du container 12 lors de la dépose sur une station 26 (pour tout type de container, mais en particulier pour de petits containers instables). Ainsi, aux stations 26 où les containers 12 sont chargés sur le système 10 ou aux stations 26 où les containers 12 sont retirées du système 10, les containers 12 sont déplacés verticalement entre les mâchoires 182 - possiblement par un robot.

Non seulement le système 10 permet la manipulation des containers avec précaution, en particulier lors du dépôt sur une station, lors du soulèvement depuis une station ou lors de la transition entre deux stations, mais encore, le système 10 assure la préhension des containers 12 sans endommagement nuisible des containers 12. Lors du passage des pinces 18 de la configuration ouverte à la configuration fermée, les containers 12 glissent le long des rampes 20. Ainsi, les rampes 20 sont aptes à présenter une zone de préhension 34 d'un container 12 aux mâchoires 182 dans la configuration fermée des pinces 18 afin de saisir les containers par cette zone 34 par les pinces. Ainsi, les mâchoires 182 saisissent les containers 12 de manière localisée. Ceci réduit les risques d'endommagement du reste de la surface du container 12. La zone 34 de préhension peut être une zone renforcée des containers 12 de telle sorte que d'une part cette zone soit à distance de la substance et que d'autre part, la nature renforcée de cette zone permet de réduire les risques d'endommagement du container par l'action des pinces. La nature renforcée de la zone 34 permet aussi de reprendre les forces verticales exercées par les pinces 18 sur le container 12 à certaines stations 26, comme indiqué ci-dessus, sans endommager la surface latérale extérieure 121 du corps du container 12 (entre le col 122 et le fond 123 du container). La zone 34 de préhension est par exemple un bourrelet situé au niveau du col 122 du container 12. Les pinces 18 - par l'intermédiaire des mâchoires 182 - ne touchent pas les containers 12 sur le reste de leur hauteur, selon la surface latérale extérieure 121 du corps de container 12. La présence de la zone 34 sous le col du container 12 réduit aussi les risques de basculement du container 12 lors des opérations de manipulation par le système 10. Afin de saisir la zone 34 sous forme de bourrelet, les pinces 18, et en particulier des mâchoires 182, peuvent être munies d'une rainure 36 d'une forme apte à la préhension du bourrelet.

Par ailleurs, les pinces 18 comportent chacune une demi-coque 183 entourant partiellement le container 12 en configuration fermée des pinces 18, mais sans toucher le container 12, de manière à ne pas risquer d'endommager la surface extérieure 121 du corps des containers 12. Les demi-coques 183 s'étendent entre les rampes 20 et les mâchoires 182. En configuration fermée des pinces, un espace (visible sur la figure 2) est entre les demi-coques 183 et la surface latérale extérieure 121 du corps des containers 12, pour éviter tout endommagement. Les pinces en configuration fermée sont aptes à immobiliser le container avec un espace entre les pinces et le container, autour la surface latérale extérieure 121 (entre le col 122 et le fond 123 du container) du corps du container. Les pinces 18 en configuration fermée immobilisent un container sans contact avec la surface latérale extérieure du corps du container. Ainsi, les pinces 18 sont en contact du container 12 tout au plus au niveau du bourrelet 34 dans le col 122 du container et du fond 123 du container.

De préférence, les pinces 18 sont reliées électriquement à la masse du système 10. Ceci assure la continuité électrique entre les pinces 18 en contact des containers et la masse du système 10. Ceci permet d'éliminer des charges électrostatiques pouvant apparaître entre les pinces 18 et les containers 12. Ceci permet d'éviter de fausser toute opération de pesée des containers 12 (avant ou après introduction de la substance). En effet, pour assurer une pesée précise, le container 12 est de préférence complétement libre et sans interaction électrostatique avec l'environnement - les pinces 18 par exemple. Ceci permet aussi d'éviter que les containers 12 restent collés à l'une des pinces lorsque celles-ci s'ouvrent pour libérer les containers sur une station (ce qui pourrait provoquer un basculement des containers ou un déplacement des containers sur une station). Egalement, pour réduire les risques d'interférence électrostatiques entre les pinces et les containers lors du passage à une configuration ouverte, les pinces d'une même paire s'écartent suffisamment l'une de l'autre. Le système 10 permet de réduire les risques d'apparition de charges électrostatiques contrairement à des systèmes de l'art antérieur dans lesquels les containers sont poussés d'une station à une autre, le frottement des containers sur le support créant des charges électrostatiques.

Egalement, afin de réduire le risque d'interférence électrostatique, les stations de pesée peuvent être soumise utilement à l'action d'un désionisateur afin de neutraliser les charges électrostatiques susceptibles de s'être accumulées sur le container.

Les pinces 18, et en particulier les mâchoires 182 et les rampes 20, sont en matière synthétique, apte à conduire les charges électrostatiques. Ceci permet d'éviter l'accumulation de ces charges électrostatiques entre les pinces 18 et le container 12. En outre, le matériau des pinces 18, et en particulier des mâchoires 182 et des rampes 20, est aussi choisi de sorte à éviter l'endommagement des containers 12 lors de leur saisi. En particulier, le matériau évite la création de griffures sur le container. Le matériau des pinces 18, et en particulier des mâchoires 182, est par exemple du Polyétheréthercétone (PEEK) ou du Polyoxyméthylène (POM).

L'invention se rapporte aussi à un procédé de manipulation de containers 12 aptes à contenir la substance médicinale. Le procédé comprend la fourniture du système 10 et la fourniture de containers 12. Le procédé comprend ensuite la manipulation des containers 12 par le système 10. La manipulation des containers comprend le soulèvement des containers 12 depuis les stations 26 du système ou le dépôt des containers 12 sur les stations 26 par le passage des pinces 18 entre des configurations fermée ou ouverte. Ceci permet une manipulation précise des containers 12, évitant l'apparition de forces électrostatiques nuisibles lors du traitement des containers aux différentes stations 26 et d'élan dans le mouvement des containers existants dans les systèmes où les containers sont poussés d'une station à une autre. Au cours de la manipulation des containers dans le procédé de manipulation, entre la configuration ouverte et la configuration fermée des pinces 18, les rampes pénètrent dans la rainure 28 des stations 26 pour soulever un container depuis la station 26. Ceci permet de manipuler avec précaution les containers, de les positionner et de les maintenir précisément en hauteur entre les pinces, tout en s'opposant aux forces verticales dirigées de bas en haut et de haut en bas générées par les processus mis en œuvre aux différentes stations. Egalement, au cours de la manipulation des containers dans le procédé de manipulation, entre la configuration fermée et la configuration ouverte des pinces 18, les rampes s'écartent l'une de l'autre dans la rainure 28 des stations 26 pour déposer un container sur la station 26. Ceci permet à nouveau de manipuler avec précaution les containers et les positionner précisément sur les stations. D'une manière générale, le procédé évite aussi d'endommager la surface extérieure du corps des flacons.

## Revendications

1. Système (10) de manipulation de containers (12) aptes à contenir une substance médicinale, comprenant
- Une roue (14) mobile en rotation autour d'un axe,
- Des pinces (18) de manipulation de container, les pinces (18) étant articulées à la roue et étant mobiles entre une configuration fermée de saisie d'un container et une configuration ouverte de libération d'un container,
chaque paire de pinces (18) comprenant des rampes (20) aptes à soulever ou déposer un container lors du passage des pinces d'une configuration à une autre,
- Des stations (26), les pinces (18) étant aptes à déposer un container sur les stations et à soulever un container depuis les stations;
**caractérisée en ce que** les stations comportent une rainure (28) dans laquelle les rampes d'une pince (18) sont aptes à se déplacer entre les configurations ouverte et fermée.

2. Système (10) selon la revendication précédente, dans lequel les rampes (10) sont aptes à soulever un container (12) entre la configuration ouverte et la configuration fermée des pinces (18) et sont aptes à déposer un container entre la configuration fermée et la configuration ouverte des pinces (18).

3. Système (10) selon l'une des revendications précédentes, dans lequel les pinces (18) en configuration fermée immobilisent un container selon une direction verticale.

4. Système (10) selon l'une des revendications précédentes, dans lequel les pinces (18) en configuration fermée sont aptes à immobiliser le container avec un espace entre les pinces et le container, autour de la surface latérale extérieure du container.

5. Système (10) selon l'une des revendications précédentes, dans lequel les rampes (20) d'une paire de pinces (18) ont une pente en regard l'une de l'autre.

6. Système (10) selon l'une des revendications précédentes, dans lequel entre la configuration ouverte et la configuration fermée des pinces (18), les rampes sont aptes à pénétrer dans la rainure pour soulever un container depuis une station (26).

7. Système (10) selon l'une des trois revendications précédentes, dans lequel, entre la configuration fermée et la configuration ouverte des pinces (18), les rampes sont aptes à s'écarter l'une de l'autre dans la rainure pour déposer un container sur une station (26).

8. Système (10) selon l'une des revendications précédentes, dans lequel la roue (14) est mobile en rotation par incrément entre différentes stations (26).

9. Système (10) selon l'une des revendications précédentes, comprenant en outre à chaque station (26) des organes parmi des organes d'introduction d'un container entre les pinces, des organes d'introduction d'une substance médicinale dans les containers, des organes de pesée des containers à vide et contenant la substance médicinale, des organes de fermeture des containers, des organes d'apposition d'une capsule sur les containers..

10. Système (10) selon l'une des revendications précédentes, dans lequel les pinces (18) sont aptes à s'écarter l'une de l'autre entre la configuration fermée et la configuration ouverte d'une dimension supérieure au diamètre extérieur d'un container ou d'une dimension inférieure au diamètre extérieur d'un container.

11. Système (10) selon l'une des revendications précédentes, dans lequel les pinces (18) comportent un bras (181) articulé à la roue (14) d'une part, et supportant une mâchoire (182) et une rampe (20) d'autre part.

12. Système (10) selon la revendication précédente, dans lequel les rampes sont aptes à présenter une zone (34) de préhension d'un container aux mâchoires (182) dans la configuration fermée des pinces.

13. Système (10) selon l'une des revendications précédentes, dans lequel les pinces (18) sont reliées électriquement à la masse du système.

14. Système (10) selon l'une des revendications précédentes, dans lequel les pinces (18) sont en matière synthétique apte à conduire les charges électrostatiques.

15. Un procédé de manipulation de containers aptes à contenir une substance médicinale, le procédé comprenant
- la fourniture du système (10) selon l'une des revendications précédentes et la fourniture de containers (12),
- la manipulation des containers (12) par le système(10).

## Patentansprüche

1. System (10) zur Handhabung von Behältern (12), die so angepasst sind, eine medizinische Substanz zu enthalten, umfassend
- ein Rad (14), das um eine Achse drehbeweglich ist,
- Greifer (18) zur Handhabung von Behältern, wobei die Greifer (18) an dem Rad angelenkt und zwischen einer geschlossenen Konfiguration zum Greifen eines Behälters und einer offenen Konfiguration zum Freigeben eines Behälters beweglich sind,
wobei jedes Paar Greifer (18) Schrägen (20) umfasst, die so angepasst sind, beim Übergang der Greifer von einer Konfiguration in eine andere einen Behälter anzuheben oder abzusetzen,
- Stationen (26), wobei die Greifer (18) so angepasst sind, einen Behälter in den Stationen abzusetzen und einen Behälter aus den Stationen anzuheben; **dadurch gekennzeichnet, dass** die Stationen eine Nut (28) umfassen, in der die Schrägen eines Greifers (18) so angepasst sind, sich zwischen der offenen und der geschlossenen Konfiguration zu bewegen.

2. System (10) nach dem vorstehenden Anspruch, wobei die Schrägen (10) so angepasst sind, einen Behälter (12) zwischen der offenen Konfiguration und der geschlossenen Konfiguration der Greifer (18) anzuheben, und so angepasst sind, einen Behälter zwischen der geschlossenen Konfiguration und der offenen Konfiguration der Greifer (18) abzusetzen.

3. System (10) nach einem der vorstehenden Ansprüche, wobei die Greifer (18) in der geschlossenen Konfiguration einen Behälter in einer vertikalen Richtung fixieren.

4. System (10) nach einem der vorstehenden Ansprüche, wobei die Greifer (18) in der geschlossenen Konfiguration so angepasst sind, den Behälter mit einem Spalt zwischen den Greifern und dem Behälter um die äußere Seitenfläche des Behälters herum zu fixieren.

5. System (10) nach einem der vorstehenden Ansprüche, wobei die Schrägen (20) eines Paares Greifer (18) eine einander zugewandte Neigung aufweisen.

6. System (10) nach einem der vorstehenden Ansprüche, wobei zwischen der offenen Konfiguration und der geschlossenen Konfiguration der Greifer (18) die Schrägen so angepasst sind, in die Nut einzudringen, um einen Behälter aus einer Station (26) anzuheben.

7. System (10) nach einem der drei vorstehenden Ansprüche, wobei zwischen der geschlossenen Konfiguration und der offenen Konfiguration der Greifer (18) die Schrägen so angepasst sind, sich in der Nut voneinander zu beabstanden, um einen Behälter in einer Station (26) abzusetzen.

8. System (10) nach einem der vorstehenden Ansprüche, wobei das Rad (14) inkrementell zwischen verschiedenen Stationen (26) drehbeweglich ist.

9. System (10) nach einem der vorstehenden Ansprüche, das weiter an jeder Station (26) Organe umfasst aus Organen zum Einführen eines Behälters zwischen die Greifer, Organen zum Einführen einer medizinischen Substanz in die Behälter, Organen zum Wiegen der Behälter im Leerzustand und die medizinische Substanz enthaltend, Organen zum Verschließen der Behälter, Organen zum Anbringen einer Kapsel auf den Behältern.

10. System (10) nach einem der vorstehenden Ansprüche, wobei die Greifer (18) so angepasst sind, sich zwischen der geschlossenen Konfiguration und der offenen Konfiguration um eine Abmessung, die größer ist als der Außendurchmesser eines Behälters, oder um eine Abmessung, die kleiner ist als der Außendurchmesser eines Behälters, voneinander zu beabstanden.

11. System (10) nach einem der vorstehenden Ansprüche, wobei die Greifer (18) einen Arm (181) umfassen, der einerseits an dem Rad (14) angelenkt ist und andererseits eine Backe (182) und eine Schräge (20) trägt.

12. System (10) nach dem vorstehenden Anspruch, wobei die Schrägen so angepasst sind, den Backen (182) in der geschlossenen Konfiguration der Greifer einen Bereich (34) zum Greifen eines Behälters zu präsentieren.

13. System (10) nach einem der vorstehenden Ansprüche, wobei die Greifer (18) elektrisch an die Masse des Systems angeschlossen sind.

14. System (10) nach einem der vorstehenden Ansprüche, wobei die Greifer (18) aus synthetischem Material bestehen, das so angepasst ist, die elektrostatischen Ladungen zu leiten.

15. Verfahren zur Handhabung von Behältern, die so angepasst sind, eine medizinische Substanz zu enthalten, wobei das Verfahren umfasst
- das Bereitstellen des Systems (10) nach einem der vorstehenden Ansprüche und das Bereitstellen von Behältern (12),
- das Handhaben der Behälter (12) durch das System (10).

## Claims

1. A system (10) for handling containers (12) suitable for containing a medicinal substance, comprising
- a wheel (14) movable in rotation about an axis,
- container handling clamps (18), the clamps (18) being hinged to the wheel and being movable between a closed configuration for gripping a container and an open configuration for releasing a container,
each pair of clamps (18) comprising ramps (20) suitable for lifting or depositing a container as the clamps move from one configuration to another,
- stations (26), the clamps (18) being suitable for depositing a container on the stations and for lifting a container from the stations;
**characterised in that** the stations comprise a groove (28) in which the ramps of a clamp (18) are suitable for moving between the open and closed configurations.

2. The system (10) according to the preceding claim, wherein the ramps (10) are suitable for lifting a container (12) between the open configuration and the closed configuration of the clamps (18) and are suitable for depositing a container between the closed configuration and the open configuration of the clamps (18).

3. The system (10) according to one of the preceding claims, wherein the clamps (18) in the closed configuration immobilise a container in a vertical direction.

4. The system (10) according to any of the preceding claims, wherein the clamps (18) in the closed configuration are suitable for immobilising the container with a space between the clamps and the container, around the outer lateral surface of the container.

5. The system (10) according to one of the preceding claims, wherein the ramps (20) of a pair of clamps (18) have a slope facing each other.

6. The system (10) according to one of the preceding claims, wherein between the open configuration and the closed configuration of the clamps (18), the ramps are suitable for penetrating the groove to lift a container from a station (26).

7. The system (10) according to one of the three preceding claims, wherein, between the closed configuration and the open configuration of the clamps (18), the ramps are suitable for moving away from each other in the groove to deposit a container on a station (26).

8. The system (10) according to one of the preceding claims, wherein the wheel (14) is movable in rotation incrementally between different stations (26).

9. The system (10) according to one of the preceding claims, further comprising, at each station (26), members amongst members for introducing a container between the clamps, members for introducing a medicinal substance into the containers, members for weighing the empty containers and containing the medicinal substance, members for closing the containers, and members for affixing a capsule to the containers.

10. The system (10) according to one of the preceding claims, wherein the clamps (18) are suitable for moving away from each other between the closed configuration and the open configuration by a dimension greater than the outer diameter of a container or by a dimension less than the outer diameter of a container.

11. The system (10) according to one of the preceding claims, wherein the clamps (18) comprise an arm (181) hinged to the wheel (14) on the one hand, and supporting a jaw (182) and a ramp (20) on the other hand.

12. The system (10) according to the preceding claim, wherein the ramps are suitable for presenting a gripping area (34) of a container to the jaws (182) in the closed configuration of the clamps.

13. The system (10) according to one of the preceding claims, wherein the clamps (18) are electrically connected to the earth of the system.

14. The system (10) according to one of the preceding claims, wherein the clamps (18) are made of a synthetic material suitable for conducting the electrostatic charges.

15. A method for handling containers suitable for containing a medicinal substance, the method comprising
- providing the system (10) according to one of the preceding claims and providing containers (12),
- handling of the containers (12) by the system (10).
